# EUROPEAN PATENT SPECIFICATION

(11) **EP 3 225 642 B1**
(45) Date of publication and mention of the grant of the patent: **30.12.2020**
(21) Application number: 16870934.3
(22) Date of filing: 09.11.2016
(51) Int. Cl.: C08F 212/08, C08F 212/10, C08L 53/02, C08L 25/06, C08F 293/00, C08L 25/12, C08L 53/00

(54) **TRANSPARENT THERMOPLASTIC RESIN AND METHOD FOR PRODUCING SAME**
TRANSPARENTES THERMOPLASTISCHES HARZ UND VERFAHREN ZUR HERSTELLUNG DAVON
RÉSINE THERMOPLASTIQUE TRANSPARENTE ET SON PROCÉDÉ DE PRODUCTION

(30) Priority: 30.11.2015 KR 20150168624
(43) Date of publication of application: 04.10.2017
(73) Proprietor: LG Chem, Ltd., Yeongdeungpo-gu Seoul 07336 (KR)
(72) Inventor: LEE, Roo Da, Daejeon 34122 (KR); CHOI, Jeong Su, Daejeon 34122 (KR); YOO, Keun Hoon, Daejeon 34122 (KR); LEE, Won Seok, Daejeon 34122 (KR); JANG, Seok Goo, Daejeon 34122 (KR); PARK, Sang Hoo, Daejeon 34122 (KR); KIM, Ho Hoon, Daejeon 34122 (KR); SHIM, Hyung Seop, Daejeon 34122 (KR)
(74) Representative: Goddar, Heinz J.
(86) International application number: PCT/KR2016/012841
(87) International publication number: WO 2017/095038

(56) References cited:
- WO-A1-2015/125707
- GB-A- 1 476 912
- JP-A- 2009 155 473
- JP-B2- 3 293 701
- KR-A- 20000 039 470
- KR-A- 20070 073 028
- KR-A- 20150 072 095
- JELENA BOZOVIC-VUKIC ET AL: "SAN -b- P4VP Block Copolymer Synthesis by Chain Extension from RAFT-Functional Poly(4-vinylpyridine) in Solution and in Emulsion", MACROMOLECULES, vol. 40, no. 20, 5 September 2007 (2007-09-05), pages 7132-7139, XP055494063, US ISSN: 0024-9297, DOI: 10.1021/ma070789z

## Description

### [Technical Field]

The present invention relates to a transparent thermoplastic resin and a method of preparing the same. More particularly, the present invention relates to a transparent thermoplastic resin prepared to have a specific structure by controlling addition time points of monomers, a method of preparing the transparent thermoplastic resin, a transparent thermoplastic resin composition exhibiting superior transparency and impact strength and excellent fluidity, which causes superior processability, due to inclusion of the transparent thermoplastic resin, and a method of preparing the transparent thermoplastic resin composition.

### [Background Art]

In general, a resin used in products requiring transparency is made of a single ingredient substance to have a single refractive index. However, since the specific characteristics of each substance appear when a single ingredient substance is used, there are many restrictions in variously utilizing the substance in various fields. Accordingly, attempts to prepare a material providing transparency while using various substances to utilize advantageous specific properties thereof are ongoing.

In connection with this, an acrylonitrile-butadiene-styrene thermoplastic resin (hereinafter referred to as "ABS resin") has mechanical properties, such as processability, due to inclusion of styrene, stiffness and chemical resistance due to inclusion of acrylonitrile, and impact resistance due to inclusion of butadiene, and aesthetically pleasing appearance, thereby being variously used in automobile parts, home appliances, OA devices such as printers and scanners, etc. However, since refractive indexes of an acrylonitrile-based resin, a styrene-based resin, and a conjugated diene-based resin are greatly different from each other, realization of a transparency level similar to that exhibited in a single polymer through adjustment of the different refractive indexes has not yet been solved. In addition, although transparency is realized, it is very difficult to simultaneously increase impact strength and fluidity while retaining superior transparency. Therefore, these problems remain a major challenge.

### [Related Art Document]

[Patent Document] (Patent Document 1) JP3293701 B2

KR 20070073028 A discloses a method for preparing a SAN-based copolymer, the method comprising the steps of: feeding a monomer mixture of a styrene-based monomer and an acrylonitrile-based monomer into a reactor; polymerizing the fed monomer mixture such that the polymer conversion rate is 70-90%; additionally feeding a styrene-based monomer into a decanter connected to a reaction bath, and then additionally feeding the monomer mixture in the decanter into the reaction bath; and additionally polymerizing the additionally fed monomer mixture, wherein the use amount of the styrene-based monomer is 50-90 wt% relative to the total weight of the monomer mixture, wherein the use amount of the acrylonitrile-based monomer is 10-50 wt%, and wherein the content of the additionally fed styrene-based monomer is 3-40 parts by weight relative to 100 parts by weight of the additionally fed monomer mixture.

### [Disclosure]

### [Technical Problem]

Therefore, the present invention has been made in view of the above problems, and it is one object of the present invention to provide a transparent thermoplastic resin prepared to have a specific structure by controlling addition time points of monomers and a method of preparing the same.

It is another object of the present invention to provide a transparent thermoplastic resin composition exhibiting superior transparency and impact strength and excellent fluidity, which causes superior processability, due to inclusion of the transparent thermoplastic resin and a method of preparing the transparent thermoplastic resin composition.

The above and other objects can be accomplished by the present disclosure described below.

### [Technical Solution]

In accordance with one aspect of the present invention, provided is a method of preparing a transparent thermoplastic resin, the method comprising: a first polymerization step of polymerizing 50 to 80 % by weight relative to the weight of the transparent thermoplastic resin of an aromatic vinyl compound, 10 to 30 % by weight relative to the weight of the transparent thermoplastic resin of a vinyl cyanide compound, and 0 to 15 % by weight of (meth)acrylic acid alkyl ester relative to the weight of the transparent thermoplastic resin; a second polymerization step of polymerizing by additionally adding 1 to 10 % by weight relative to the weight of the transparent thermoplastic resin of the aromatic vinyl compound; and an obtainment step of obtaining a transparent thermoplastic resin, and wherein the first polymerization step is performed at 105 to 115 °C In accordance with another aspect of the present invention, there is provided a transparent thermoplastic resin composition, comprising: greater than 5 % by weight and less than 65 % by weight relative to the weight of the transparent thermoplastic resin composition of a transparent thermoplastic resin that comprises a random copolymerization block prepared by polymerizing 50 to 80 % by weight relative to the weight of the transparent thermoplastic resin of an aromatic vinyl compound, 10 to 30 % by weight relative to the weight of the transparent thermoplastic resin of a vinyl cyanide compound, and 0 to 15 % by weight of (meth)acrylic acid alkyl ester relative to the weight of the transparent thermoplastic resin, and an aromatic vinyl compound block prepared by polymerizing 1 to 10 % by weight relative to the weight of the transparent thermoplastic resin of an aromatic vinyl compound; and
greater than 35 % by weight and less than to 95 % by weight relative to the weight of the transparent thermoplastic resin composition of an aromatic vinyl compound-conjugated diene-based compound block copolymer, and
wherein the method of preparing the transparent thermoplastic resin composition comprises:
a first polymerization step of polymerizing 50 to 80 % by weight of an aromatic vinyl compound, 10 to 30 % by weight of a vinyl cyanide compound, and more than 0 and below or equal to 15 % by weight of (meth) acrylic acid alkyl ester;
a second polymerization step of polymerizing by additionally adding 1 to 10 % by weight of the aromatic vinyl compound; an obtainment step of obtaining a transparent thermoplastic resin; and a melting and kneading step of melting and kneading greater than 5 % by weight and less than 65 % by weight of the obtained transparent thermoplastic resin with greater than 35 % by weight and less than to 95 % by weight of an aromatic vinyl compound-conjugated diene-based compound block copolymer, and wherein the first polymerization step is performed at 105 to 115 °C.

In accordance with yet another aspect of the present invention, there is provided a method of preparing a transparent thermoplastic resin composition, the method comprising: a first polymerization step of polymerizing 50 to 80 % by weight relative to the weight of the transparent thermoplastic resin of an aromatic vinyl compound, 10 to 30 % by weight relative to the weight of the transparent thermoplastic resin of a vinyl cyanide compound, and 0 to 15% by weight of (meth) acrylic acid alkyl ester; a second polymerization step of polymerizing by additionally adding 1 to 10 % by weight relative to the weight of the transparent thermoplastic resin of the aromatic vinyl compound; an obtainment step of obtaining a transparent thermoplastic resin; and a melting and kneading step of melting and kneading greater than 5 % by weight and less than 65 % by weight relative to the weight of the transparent thermoplastic resin composition of the obtained transparent thermoplastic resin with greater than 35 % by weight and less than to 95 % by weight relative to the weight of the transparent thermoplastic resin composition of an aromatic vinyl compound-conjugated diene-based compound block copolymer, and wherein the first polymerization step is performed at 105 to 115 °C.

According to the invention is also a transparent thermoplastic resin manufactured from the method of preparing a transparent thermoplastic resin according to the invention.

Further embodiments are disclosed in the dependent claims.

### [Advantageous effects]

As apparent from the fore-going, the present invention advantageously provides a transparent thermoplastic resin prepared to have a specific structure by controlling addition time points of monomers, a method of preparing the transparent thermoplastic resin, a transparent thermoplastic resin composition exhibiting superior transparency and impact strength and excellent fluidity, which causes superior processability, due to inclusion of the transparent thermoplastic resin, and a method of preparing the transparent thermoplastic resin composition.

### [Best mode]

Hereinafter, the present invention is described in detail.

The present inventors confirmed that, when a transparent thermoplastic resin including a random copolymerization block and an aromatic vinyl compound block is prepared while adjusting addition time points of some monomers, a resin composition including the transparent thermoplastic resin exhibits increased transparency and impact strength and excellent fluidity, which causes processability improvement, thus completing the present invention.

The transparent thermoplastic resin according to the present invention is now described in detail.

The transparent thermoplastic resin includes a random copolymerization block prepared by polymerizing 50 to 80 % by weight of an aromatic vinyl compound, 10 to 30 % by weight of a vinyl cyanide compound, and 0 to 15 % by weight of (meth)acrylic acid alkyl ester; and an aromatic vinyl compound block prepared by polymerizing 1 to 10 % by weight of an aromatic vinyl compound.

The random copolymerization block may be, for example, a block randomly copolymerized during first polymerization of the transparent thermoplastic resin, and the aromatic vinyl compound block may be, for example, a block polymerized during second polymerization of the transparent thermoplastic resin.

The aromatic vinyl compound block may be polymerized, for example, by being bonded to one end or both ends of the random copolymerization block. In this case, when the aromatic vinyl compound block is mixed with an aromatic vinyl compound-conjugated diene-based compound block copolymer, the aromatic vinyl compound-conjugated diene-based compound block copolymer exhibits superior compatibility with the aromatic vinyl compound block, whereby impact strength is increased.

The transparent thermoplastic resin may have, for example, a refractive index of 1.5675 ± 0.0040, 1.5675 ± 0.0030, or 1.5675 ± 0.0020. When the transparent thermoplastic resin is mixed with an aromatic vinyl compound-conjugated diene-based compound block copolymer within this range, superior transparency is provided.

The transparent thermoplastic resin may have, for example, a weight average molecular weight of 185,000 to 300,000 g/mol, 185,000 to 280,000 g/mol, or 185,000 to 250,000 g/mol. Within this range, superior mechanical properties and property balance are exhibited.

A method of preparing the transparent thermoplastic resin according to the present invention includes a first polymerization step of polymerizing 50 to 80 % by weight of an aromatic vinyl compound, 10 to 30 % by weight of a vinyl cyanide compound, and 0 to 15 % by weight of (meth)acrylic acid alkyl ester; a second polymerization step of polymerizing by additionally adding 1 to 10 % by weight of the aromatic vinyl compound; and an obtainment step of obtaining a transparent thermoplastic resin, wherein the first polymerization step is performed at 105 to 115°C. In this case, when the aromatic vinyl compound block is mixed with the aromatic vinyl compound-conjugated diene-based compound block copolymer, the aromatic vinyl compound-conjugated diene-based compound block copolymer exhibits superior compatibility with the aromatic vinyl compound block, whereby impact strength is increased.

The first polymerization step is performed at 100 to 130 °C, or 100 to 120 °C, or 105 to 115 °C. Within this range, superior polymerization conversion rate is exhibited.

The second polymerization step may be performed, for example, at 130 to 150 °C, 135 to 150 °C, or 135 to 145 °C. Within this range, superior polymerization conversion rate is exhibited.

Each of the first and second polymerization steps may be performed, for example, for 1 to 4 hours, 1 to 3 hours, or 1 hour 30 minutes to 3 hours. Within this range, superior polymerization conversion rate is exhibited.

The content of the aromatic vinyl compound added during the first polymerization step is 50 to 80 % by weight, or 50 to 75 % by weight, or 60 to 75 % by weight, and the content of the aromatic vinyl compound added during the second polymerization step is 1 to 10 % by weight, or 1 to 8 % by weight, or 2 to 7 % by weight. Within this range, superior transparency, impact strength, and melt index are exhibited.

A total content of the aromatic vinyl compound added during the first and second polymerization steps may be60 to 80 % by weight, or 65 to 80 % by weight. Within this range, superior transparency and impact strength are provided.

Each of the first and second polymerization steps may be, for example, bulk polymerization, suspension polymerization, or emulsion polymerization, preferably bulk polymerization. In this case, productivity is superior.

The aromatic vinyl compound may be, for example, one or more selected from the group consisting of styrene, α-methylstyrene, p-methylstyrene, o-ethylstyrene, p-ethylstyrene, and vinyltoluene.

The vinyl cyanide compound may be, for example, one or more selected from the group consisting of acrylonitrile, methacrylonitrile, and ethacrylonitrile. The content of the vinyl cyanide compound is 10 to 30 % by weight, or 15 to 30 % by weight, or 18 to 29 % by weight. Within this range, superior mechanical properties and property balance are exhibited.

The (meth) acrylic acid alkyl ester may be, for example, one or more selected from the group consisting of (meth)acrylic acid methyl ester, (meth)acrylic acid ethyl ester, (meth)acrylic acid propyl ester, (meth)acrylic acid 2-ethylhexyl ester, (meth)acrylic acid decyl ester, and (meth)acrylic acid lauryl ester. The content of the (meth)acrylic acid alkyl ester is 0 to 15 % by weight, or 0 to 13 % by weight, or 0 to 10 % by weight. Within this range, superior impact strength and melt index are exhibited.

A transparent thermoplastic resin composition according to the present invention includes greater than 5 % by weight and less than 65 % by weight of a transparent thermoplastic resin that includes a random copolymerization block prepared by polymerizing 50 to 80 % by weight of an aromatic vinyl compound, 10 to 30 % by weight of a vinyl cyanide compound, and 0 to 15 % by weight of (meth)acrylic acid alkyl ester, and an aromatic vinyl compound block prepared by polymerizing 1 to 10 % by weight of an aromatic vinyl compound; and greater than 35 % by weight and less than to 95 % by weight of an aromatic vinyl compound-conjugated diene-based compound block copolymer.

An aromatic vinyl compound included in the aromatic vinyl compound-conjugated diene-based compound block copolymer may be, for example, one or more selected from the group consisting of styrene, α-methylstyrene, p-methylstyrene, o-ethylstyrene, p-ethylstyrene, and vinyltoluene. The aromatic vinyl compound may be included in an amount of 10 to 90 % by weight, 30 to 90 % by weight, or 50 to 90 % by weight with respect to the aromatic vinyl compound-conjugated diene-based compound block copolymer. Within this range, superior transparency and mechanical properties are exhibited.

A conjugated diene-based compound included in the aromatic vinyl compound-conjugated diene-based compound block copolymer may be, for example, one or more selected from the group consisting of 1,3-butadiene, 2-methyl-1,3-butadiene, 2,3-dimethyl-1,3-butadiene, 2-ethyl-1,3-butadiene, 2,3-dimethyl-1,3-butadiene, 1,3-pentadiene, and chloroprene. The conjugated diene-based compound may be included in an amount of 10 to 90 % by weight, 10 to 70 % by weight, or 10 to 50 % by weight with respect to the aromatic vinyl compound-conjugated diene-based compound block copolymer. Within this range, superior impact strength and transparency is provided.

The transparent thermoplastic resin is included in an amount of greater than 5 % by weight and less than 65 % by weight, or 10 to 50 % by weight, or 20 to 50 % by weight, or 30 to 50 % by weight with respect to the transparent thermoplastic resin composition. Within this range, superior transparency and property balance are exhibited.

The aromatic vinyl compound-conjugated diene-based compound block copolymer is included in an amount of greater than 35 % by weight and less than to 95 % by weight, or 50 to 90 % by weight, or 50 to 80 % by weight, or 50 to 70 % by weight with respect to the transparent thermoplastic resin composition. Within this range, impact strength, superior melt index and property balance are exhibited.

The transparent thermoplastic resin composition may have, for example, a transparency (haze) of 2.0 or less, 0.1 to 2.0, or 1.0 to 1.9. Within this range, superior transparency is provided.

The transparent thermoplastic resin composition may have, for example, a transmittance (Tt) of 89.9 % or more, 89.9 to 99.9 %, or 90.0 to 95.0 %. Within this range, superior transparency is provided.

The transparent thermoplastic resin composition may have, for example, an impact strength of greater than 10.6 kgf ·cm/cm, 10.6 to 20 kgf ·cm/cm, or 11.0 to 15.0 kgf·cm/cm.

The transparent thermoplastic resin composition may have, for example, a melt index of 8.0 to 15.0 g/10 min, 8.5 to 13.0 g/10 min, or 8.6 to 12.0 g/10 min (under conditions of 200 °C and 5 kg).

A method of preparing the transparent thermoplastic resin composition according to the present invention includes a first polymerization step of polymerizing 50 to 80 % by weight of an aromatic vinyl compound, 10 to 30 % by weight of a vinyl cyanide compound, and 0 to 15 % by weight of (meth)acrylic acid alkyl ester; a second polymerization step of polymerizing by additionally adding 1 to 10 % by weight of the aromatic vinyl compound; an obtainment step of obtaining a transparent thermoplastic resin; and a melting and kneading step of melting and kneading greater than 5 % by weight and less than 65 % by weight of the obtained transparent thermoplastic resin with greater than 35 % by weight and less than to 95 % by weight of an aromatic vinyl compound-conjugated diene-based compound block copolymer, wherein the first polymerization step is performed at 105 to 115°C.

The aromatic vinyl compound-conjugated diene-based compound block copolymer may be understood as a general block copolymer wherein each of the aromatic vinyl compound and the conjugated diene-based compound forms a block. As needed, the aromatic vinyl compound-conjugated diene-based compound block copolymer may further include a block composed of a monomer that may be copolymerized with each of the monomers. Here, a polymerization method is not specifically limited so long as the block copolymer may be polymerized. A monomer copolymerizable with each of the monomers may be, for example, a vinyl cyanide compound, an unsaturated carboxylic acid, an anhydride thereof, or the like.

The melting and kneading step may be performed by means of a general extruder. For example, a Banbury mixer, a single-screw extruder, a twin-screw extruder, a Buss kneader, or the like may be used. In addition, the melting and kneading step may be performed at 200 to 300 °C, 200 to 250 °C, or 210 to 230 °C.

Now, the present invention will be described in more detail with reference to the following preferred examples. However, these examples are provided for illustrative purposes only.

### [Preparation examples]

### Preparation Example 1

68 parts by weight of styrene, 9 parts by weight of methyl methacrylate, 20 parts by weight of acrylonitrile, 0.14 parts by weight of azobisisobutyronitrile as an initiator, and 25 parts by weight of ethylbenzene as a reactive medium were fed into a reactor and mixed therein, and bulk polymerization (first polymerization) was performed at 110 °C for two hours. Subsequently, 3 parts by weight of styrene were additionally added thereto at 140 °C, and bulk polymerization was performed for two hours. As a result, a transparent thermoplastic resin was prepared. The prepared resin exhibited a refractive index of 1.5670 and a weight average molecular weight of 231,000 g/mol.

### Preparation Example 2

An experiment was performed in the same manner as in Preparation Example 1, except that 69 parts by weight of styrene and 28 parts by weight of acrylonitrile, instead of 68 parts by weight of styrene, 9 parts by weight of methyl methacrylate, and 20 parts by weight of acrylonitrile, were added during first polymerization. An obtained resin exhibited a refractive index of 1.5690 and a weight average molecular weight of 188,000 g/mol.

### Preparation Example 3

An experiment was performed in the same manner as in Preparation Example 1, except that 65 parts by weight of styrene were added during first polymerization and 6 parts by weight of styrene were added during second polymerization. An obtained resin exhibited a refractive index of 1.5679 and a weight average molecular weight of 211,000 g/mol.

### Preparation Example 4 (not according to the invention)

An experiment was performed in the same manner as in Preparation Example 1, except that 71 parts by weight of styrene were added during first polymerization and second polymerization was not separately performed. An obtained resin exhibited a refractive index of 1.5630 and a weight average molecular weight of 220,000 g/mol.

### Preparation Example 5 (not according to the invention)

An experiment was performed in the same manner as in Preparation Example 1, except that 72 parts by weight of styrene and 28 parts by weight of acrylonitrile, instead of 68 parts by weight of styrene, 9 parts by weight of methyl methacrylate, and 20 parts by weight of acrylonitrile, were added during first polymerization and second polymerization was not separately performed. An obtained resin exhibited a refractive index of 1.5670 and a weight average molecular weight of 182,000 g/mol.

### Preparation Example 6 (not according to the invention)

An experiment was performed in the same manner as in Preparation Example 1, except that 60 parts by weight of styrene were added during first polymerization and 11 parts by weight of styrene were added during second polymerization. An obtained resin exhibited a refractive index of 1.5570 and a weight average molecular weight of 175,000 g/mol.

### [Example]

### Examples 1 to 5 and Comparative Examples 1 to 5

The transparent thermoplastic resin prepared according to each of Preparation Examples 1 to 6 was mixed with a styrene-butadiene block copolymer including 30 % by weight of butadiene and having a refractive index of 1.5675 (product name: KK-38 grade, manufactured by Chevron-Phillips) in amounts summarized in Table 1 below. A resultant mixture was prepared into a pellet-type thermoplastic transparent resin composition by means of a twin-screw extrusion kneader at a cylinder temperature of 220 °C. The pellet-type thermoplastic transparent resin composition was injection-molded, thereby manufacturing a specimen for measuring properties.

**[Table 1]**

| Classificat ion | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| Preparation Example 1 | 35 | - | - | 50 | - | - | - | - | - | 5 |
| Preparation Example 2 | - | 45 | - | - | 30 | - | - | - | 65 | - |
| Preparation Example 3 | - | - | 35 | - | - | - | - | - | - | - |
| Preparation Example 4 | - | - | - | - | - | 35 | - | - | - | - |
| Preparation Example 5 | - | - | - | - | - | - | 45 | - | - | - |
| Preparation Example 6 | - | - | - | - | - | - | - | 35 | - | - |
| Styrene-butadiene block copolymer | 65 | 55 | 65 | 50 | 70 | 65 | 55 | 65 | 35 | 95 |
| Total (% by weight) | 100 | 100 | 100 | 100 | 100 | 100 | 100 | 100 | 100 | 100 |

### [Test example]

The properties of an acrylic resin composition specimen obtained according to each of Examples 1 to 5 and Comparative Examples 1 to 5 were measured according to the following methods. Results are summarized in Table 2 below.

### Measurement methods

* Refractive index: A specimen was thinly sliced to a thickness of about 0.2 mm, and then the refractive index thereof was measured by means of Abbe's refractometer at 25 °C.
* Weight average molecular weight: Measured calibrating with PC standard by means of Agilent 1200 series GPC.
* Transparency and transmittance (Haze, Tt) : The transparency and transmittance of a specimen were respectively measured according to a standard measurement method, ASTM D1003.
* Impact strength (Notched Izod, kgf·cm/cm): A 1/4" specimen was used and the impact strength thereof was measured according to a standard measurement method, ASTM D256.
* Melt index (g/10 min): A specimen was used and the melt index thereof was measured according to a standard measurement method, ASTM D1238 (under conditions of 200 °C and 5 kg) .

**[Table 2]**

| Classifi cation | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| Transpar ency (haze) | 1.1 | 1.8 | 1.5 | 1.2 | 1.7 | 2.3 | 2.1 | 5.4 | 1.9 | 4.5 |
| Transmit tance (Tt) | 90.3 | 90.0 | 90.2 | 90.3 | 90.0 | 89.8 | 89.5 | 85.3 | 90.1 | 89.4 |
| Impact strength | 13.0 | 11.2 | 12.5 | 10.9 | 19.6 | 8.3 | 6.5 | 10.6 | 5.6 | 15.3 |
| Melt index | 9.1 | 12.0 | 8.6 | 8.1 | 14.1 | 8.5 | 11.0 | 9.0 | 7.9 | 10.2 |

As shown in Table 2, it can be confirmed that, in the cases of Examples 1 to 5 including the transparent thermoplastic resin prepared according to the present invention, transparency, transmittance, impact strength, and melt index are all improved.

On the other hand, it can be confirmed that, in the cases of Comparative Example 1 and 2 in which styrene is not additionally added, transparency, transmittance and impact strength are poor although monomers are included in the same contents. In addition, it can be confirmed that, in the case of Comparative Example 3 in which styrene is added in an excessive amount during second polymerization, transparency is rapidly decreased and transmittance and impact strength are poor. Further, it can be confirmed that, in the case of Comparative Example 4 in which the thermoplastic resin prepared according to the present invention is included in a large amount, impact strength and melt index are decreased and, in the case of Comparative Example 5 in which the thermoplastic resin is included in a small amount, transparency and transmittance are poor.

From these result, the present inventors confirmed that the resin composition including the transparent thermoplastic resin, which includes the random copolymerization block and the aromatic vinyl compound block, provides increased transparency and impact strength, and excellent fluidity causing processability improvement.

## Claims

1. A method of preparing a transparent thermoplastic resin, the method comprising:
a first polymerization step of polymerizing 50 to 80 % by weight relative to the weight of the transparent thermoplastic resin of an aromatic vinyl compound, 10 to 30 % by weight relative to the weight of the transparent thermoplastic resin of a vinyl cyanide compound, and 0 to 15 % by weight of (meth)acrylic acid alkyl ester relative to the weight of the transparent thermoplastic resin;
a second polymerization step of polymerizing by additionally adding 1 to 10 % by weight relative to the weight of the transparent thermoplastic resin of the aromatic vinyl compound; and
an obtainment step of obtaining a transparent thermoplastic resin, and
wherein the first polymerization step is performed at 105 to 115 °C.

2. The method according to claim 1, wherein the second polymerization step is performed at 130 to 150 °C.

3. The method according to claim 1, wherein each of the first and second polymerization steps is performed for one to four hours.

4. The method according to claim 1, wherein the total content of the aromatic vinyl compound added during the first and second polymerization steps is 60 to 80 % by weight relative to the weight of the transparent thermoplastic resin.

5. The method according to claim 1, wherein the (meth)acrylic acid alkyl ester is one or more selected from the group consisting of (meth)acrylic acid methyl ester, (meth)acrylic acid ethyl ester, (meth)acrylic acid propyl ester, (meth)acrylic acid 2-ethylhexyl ester, (meth)acrylic acid decyl ester, and (meth)acrylic acid lauryl ester.

6. A transparent thermoplastic resin composition, comprising:
greater than 5 % by weight and less than 65 % by weight relative to the weight of the transparent thermoplastic resin composition of a transparent thermoplastic resin that comprises a random copolymerization block prepared by polymerizing 50 to 80 % by weight relative to the weight of the transparent thermoplastic resin of an aromatic vinyl compound, 10 to 30 % by weight relative to the weight of the transparent thermoplastic resin of a vinyl cyanide compound, and 0 to 15 % by weight of (metb)acrylic acid alkyl ester relative to the weight of the transparent thermoplastic resin, and an aromatic vinyl compound block prepared by polymerizing 1 to 10 % by weight relative to the weight of the transparent thermoplastic resin of an aromatic vinyl compound; and
greater than 35 % by weight and less than to 95 % by weight relative to the weight of the transparent thermoplastic resin composition of an aromatic vinyl compound-conjugated diene-based compound block copolymer, and
wherein the method of preparing the transparent thermoplastic resin composition comprises:
a first polymerization step of polymerizing 50 to 80 % by weight of an aromatic vinyl compound, 10 to 30 % by weight of a vinyl cyanide compound, and more than 0 and below or equal to 15 % by weight of (meth)acrylic acid alkyl ester;
a second polymerization step of polymerizing by additionally adding 1 to 10 % by weight of the aromatic vinyl compound;
an obtainment step of obtaining a transparent thermoplastic resin; and
a melting and kneading step of melting and kneading greater than 5 % by weight and less than 65 % by weight of the obtained transparent thermoplastic resin with greater than 35 % by weight and less than to 95 % by weight of an aromatic vinyl compound-conjugated diene-based compound block copolymer, and
wherein the first polymerization step is performed at 105 to 115 °C.

7. The transparent thermoplastic resin composition according to claim 6, wherein the aromatic vinyl compound-conjugated diene-based compound block copolymer comprises 10 to 90 % by weight of a conjugated diene-based compound.

8. The transparent thermoplastic resin composition according to claim 6, wherein the conjugated diene-based compound is one or more selected from the group consisting of 1,3-butadiene, 2-methyl-1,3-butadiene, 2,3-dimethyl-1,3-butadiene, 2-ethyl-1,3-butadiene, 2,3-dimethyl-1,3-butadiene, 1,3-pentadiene, and chloroprene.

9. The transparent thermoplastic resin composition according to claim 6, wherein the transparent thermoplastic resin composition has an impact strength of greater than 10.6 kgf·cm/cm.

10. A method of preparing a transparent thermoplastic resin composition, the method comprising:
a first polymerization step of polymerizing 50 to 80 % by weight relative to the weight of the transparent thermoplastic resin of an aromatic vinyl compound, 10 to 30 % by weight relative to the weight of the transparent thermoplastic resin of a vinyl cyanide compound, and 0 to 15% by weight of (meth)acrylic acid alkyl ester;
a second polymerization step of polymerizing by additionally adding 1 to 10 % by weight relative to the weight of the transparent thermoplastic resin of the aromatic vinyl compound;
an obtainment step of obtaining a transparent thermoplastic resin; and
a melting and kneading step of melting and kneading greater than 5 % by weight and less than 65 % by weight relative to the weight of the transparent thermoplastic resin composition of the obtained transparent thermoplastic resin with greater than 35 % by weight and less than to 95 % by weight relative to the weight of the transparent thermoplastic resin composition of an aromatic vinyl compound-conjugated diene-based compound block copolymer, and
wherein the first polymerization step is performed at 105 to 115 °C.

11. A transparent thermoplastic resin manufactured from the method of preparing a transparent thermoplastic resin according to any one of claim 1 to 5.

12. The transparent thermoplastic resin according to claim 11, wherein the transparent thermoplastic resin comprises:
a random copolymerization block prepared by polymerizing 50 to 80 % by weight of an aromatic vinyl compound, 10 to 30 % by weight of a vinyl cyanide compound, and 0 to 15 % by weight of (meth)acrylic acid alkyl ester; and
an aromatic vinyl compound block prepared by polymerizing 1 to 10 % by weight of an aromatic vinyl compound.

13. The transparent thermoplastic resin according to claim 11, wherein the aromatic vinyl compound block is bonded to one end or both ends of the random copolymerization block.

14. The transparent thermoplastic resin according to claim 11, wherein the transparent thermoplastic resin has a refractive index of 1.5675 ± 0.0040.

15. The transparent thermoplastic resin according to claim 11, wherein the transparent thermoplastic resin has a weight average molecular weight of 185,000 to 300,000 g/mol.

## Patentansprüche

1. Verfahren zum Herstellen eines transparenten thermoplastischen Harzes, wobei das Verfahren umfasst:
einen ersten Polymerisationsschritt eines Polymerisierens von 50 bis 80 Gew.-%, relativ zum Gewicht des transparenten thermoplastischen Harzes, einer aromatischen Vinylverbindung, 10 bis 30 Gew.-%, relativ zum Gewicht des transparenten thermoplastischen Harzes, einer Vinylcyanidverbindung, und 0 bis 15 Gew.-% eines (Meth)acrylsäurealkylesters, relativ zum Gewicht des transparenten thermoplastischen Harzes;
einen zweiten Polymerisationsschritt eines Polymerisierens durch zusätzliches Zufügen von 1 bis 10 Gew.-%, relativ zum Gewicht des transparenten thermoplastischen Harzes, der aromatischen Vinylverbindung; und
einen Erlangungsschritt eines Erlangens eines transparenten thermoplastischen Harzes, und
wobei der erste Polymerisationsschritt bei 105 bis 115°C durchgeführt wird.

2. Verfahren nach Anspruch 1, wobei der zweite Polymerisationsschritt bei 130 bis 150°C durchgeführt wird.

3. Verfahren nach Anspruch 1, wobei jeder des ersten und des zweiten Polymerisationsschritts für eine bis vier Stunden durchgeführt wird.

4. Verfahren nach Anspruch 1, wobei der Gesamtgehalt der aromatischen Vinylverbindung, die während der ersten und zweiten Polymerisationsschritte zugegeben wird, 60 bis 80 Gew.-%, relativ zum Gewicht des transparenten thermoplastischen Harzes, ist.

5. Verfahren nach Anspruch 1, wobei der (Meth)acrylsäurealkylester einer oder mehrere ist, ausgewählt aus der Gruppe bestehend aus (Meth)acrylsäuremethylester, (Meth)acrylsäureethylester, (Meth)acrylsäurepropylester, (Meth)acrylsäure-2-ethylhexylester, (Meth)acrylsäuredecylester und (Meth)acrylsäurelaurylester.

6. Transparente thermoplastische Harzzusammensetzung, umfassend:
mehr als 5 Gew.-% und weniger als 65 Gew.-%, relativ zum Gewicht der transparenten thermoplastischen Harzzusammensetzung, eines transparenten thermoplastischen Harzes, das einen statistischen Copolymerisationsblock, hergestellt durch Polymerisieren von 50 bis 80 Gew.-%, relativ zum Gewicht des transparenten thermoplastischen Harzes, einer aromatischen Vinylverbindung, 10 bis 30 Gew.-%, relativ zum Gewicht des transparenten thermoplastischen Harzes, einer Vinylcyanidverbindung, und 0 bis 15 Gew.-% eines (Meth)acrylsäurealkylesters, relativ zum Gewicht des transparenten thermoplastischen Harzes, und einen aromatischen Vinylverbindungsblock, hergestellt durch Polymerisieren von 1 bis 10 Gew.-%, relativ zum Gewicht des transparenten thermoplastischen Harzes, einer aromatischen Vinylverbindung, umfasst; und
mehr als 35 Gew.-% und weniger als 95 Gew.-%, relativ zum Gewicht der transparenten thermoplastischen Harzzusammensetzung, eines Blockcopolymers aus einer aromatischen Vinylverbindung-einer Verbindung auf Basis von konjugiertem Dien, und
wobei das Verfahren zum Herstellen der transparenten thermoplastischen Harzzusammensetzung umfasst:
einen ersten Polymerisationsschritt eines Polymerisierens von 50 bis 80 Gew.-% einer aromatischen Vinylverbindung, 10 bis 30 Gew.-% einer Vinylcyanidverbindung und mehr als 0 und weniger oder gleich 15 Gew.-% eines (Meth)acrylsäurealkylesters;
einen zweiten Polymerisationsschritt eines Polymerisierens durch zusätzliches Zufügen von 1 bis 10 Gew.-% der aromatischen Vinylverbindung;
einen Erlangungsschritt zum Erlangen eines transparenten thermoplastischen Harzes; und
einen Schmelz- und Knetschritt zum Schmelzen und Kneten von mehr als 5 Gew.-% und weniger als 65 Gew.-% des erhaltenen transparenten thermoplastischen Harzes mit mehr als 35 Gew.-% und weniger als 95 Gew.-% eines Blockcopolymers aus einer aromatischen Vinylverbindung-einer Verbindung auf Basis von konjugiertem Dien, und
wobei der erste Polymerisationsschritt bei 105 bis 115°C durchgeführt wird.

7. Transparente thermoplastische Harzzusammensetzung nach Anspruch 6, wobei das Blockcopolymer aus aromatischer Vinylverbindung - Verbindung auf Basis von konjugiertem Dien 10 bis 90 Gew.-% einer Verbindung auf Basis von konjugiertem Dien umfasst.

8. Transparente thermoplastische Harzzusammensetzung nach Anspruch 6, wobei die Verbindung auf Basis von konjugiertem Dien eine oder mehrere ist, ausgewählt aus der Gruppe bestehend aus 1,3-Butadien, 2-Methyl-1,3-butadien, 2,3-Dimethyl-1,3-butadien, 2-Ethyl-1,3-butadien, 2,3-Dimethyl-1,3-butadien, 1,3-Pentadien und Chloropren.

9. Transparente thermoplastische Harzzusammensetzung nach Anspruch 6, wobei die transparente thermoplastische Harzzusammensetzung eine Schlagfestigkeit von mehr als 10,6 kgf·cm/cm aufweist.

10. Verfahren zum Herstellen einer transparenten thermoplastischen Harzzusammensetzung, wobei das Verfahren umfasst:
einen ersten Polymerisationsschritt eines Polymerisierens von 50 bis 80 Gew.-%, relativ zum Gewicht des transparenten thermoplastischen Harzes, einer aromatischen Vinylverbindung, 10 bis 30 Gew.-%, relativ zum Gewicht des transparenten thermoplastischen Harzes, einer Vinylcyanidverbindung und 0 bis 15 Gew.-% eines (Meth)acrylsäurealkylesters;
einen zweiten Polymerisationsschritt eines Polymerisierens durch zusätzliches Zugeben von 1 bis 10 Gew.-%, relativ zum Gewicht des transparenten thermoplastischen Harzes, der aromatischen Vinylverbindung;
einen Erlangungsschritt zum Erlangen eines transparenten thermoplastischen Harzes; und
einen Schmelz- und Knetschritt zum Schmelzen und Kneten von mehr als 5 Gew.-% und weniger als 65 Gew.-%, relativ zum Gewicht der transparenten thermoplastischen Harzzusammensetzung, des erhaltenen transparenten thermoplastischen Harzes mit mehr als 35 Gew.-% und weniger als 95 Gew.-%, relativ zum Gewicht der transparenten thermoplastischen Harzzusammensetzung, eines Blockcopolymers aus aromatischer Vinylverbindung - Verbindung auf Basis von konjugiertem Dien, und
wobei der erste Polymerisationsschritt bei 105 bis 115°C durchgeführt wird.

11. Transparentes thermoplastisches Harz, hergestellt aus dem Verfahren zum Herstellen eines transparenten thermoplastischen Harzes nach einem der Ansprüche 1 bis 5.

12. Transparentes thermoplastisches Harz nach Anspruch 11, wobei das transparente thermoplastische Harz umfasst:
einen statistischen Copolymerisationsblock, hergestellt durch Polymerisieren von 50 bis 80 Gew.-% einer aromatischen Vinylverbindung, 10 bis 30 Gew.-% einer Vinylcyanidverbindung und 0 bis 15 eines (Meth)acrylsäurealkylesters; und
einen aromatischen Vinylverbindungsblock, hergestellt durch Polymerisieren von 1 bis 10 Gew.-% einer aromatischen Vinylverbindung.

13. Transparentes thermoplastisches Harz nach Anspruch 11, wobei der aromatische Vinylverbindungsblock an ein Ende oder beide Enden des statistischen Copolymerisationsblocks angebunden ist.

14. Transparentes thermoplastisches Harz nach Anspruch 11, wobei das transparente thermoplastische Harz einen Brechungsindex von 1,5675 ± 0,0040 aufweist.

15. Transparentes thermoplastisches Harz nach Anspruch 11, wobei das transparente thermoplastische Harz ein Gewichtsmittelmolekulargewicht von 185.000 bis 300.000 g/mol aufweist.

## Revendications

1. Procédé de préparation d'une résine thermoplastique transparente, le procédé comprenant :
une première étape de polymérisation consistant à polymériser entre 50 et 80 % en poids par rapport au poids de la résine thermoplastique transparente d'un composé de vinyle aromatique, entre 10 et 30 % en poids par rapport au poids de la résine thermoplastique transparente d'un composé de cyanure de vinyle et entre 0 et 15 % en poids d'un ester d'alkyle d'acide (méth)acrylique par rapport au poids de la résine thermoplastique transparente ;
une deuxième étape de polymérisation consistant à polymériser en ajoutant en plus entre 1 et 10 % en poids par rapport au poids de la résine thermoplastique transparente du composé de vinyle aromatique ; et
une étape d'obtention consistant à obtenir une résine thermoplastique transparente, et
dans laquelle la première étape de polymérisation est effectuée entre 105 et 115°C.

2. Procédé selon la revendication 1, dans lequel la deuxième étape de polymérisation est effectuée entre 130 et 150°C.

3. Procédé selon la revendication 1, dans lequel chacune des première et deuxième étapes de polymérisation est effectuée pendant une à quatre heures.

4. Procédé selon la revendication 1, dans lequel le contenu total du composé de vinyle aromatique ajouté pendant les première et deuxième étapes de polymérisation est compris entre 60 et 80 % en poids par rapport au poids de la résine thermoplastique transparente.

5. Procédé selon la revendication 1, dans lequel l'ester d'alkyle d'acide (méth)acrylique est un ou plusieurs éléments sélectionnés dans le groupe constitué d'ester de méthyle d'acide (méth)acrylique, ester d'éthyle d'acide (méth)acrylique, ester de propyle d'acide (méth)acrylique, ester de 2-éthylhexyle d'acide (méth)acrylique, ester de décyle d'acide (méth)acrylique et ester de lauryle d'acide (méth)acrylique.

6. Composition de résine thermoplastique transparente, comprenant :
plus de 5 % en poids et moins de 65 % en poids par rapport au poids de la composition de résine thermoplastique transparente d'une résine thermoplastique transparente qui comprend une séquence de copolymérisation aléatoire préparée en polymérisant entre 50 et 80 % en poids par rapport au poids de la résine thermoplastique transparente d'un composé de vinyle aromatique, entre 10 et 30 % en poids par rapport au poids de la résine thermoplastique transparente d'un composé de cyanure de vinyle et entre 0 et 15 % en poids d'un ester d'alkyle d'acide (méth)acrylique par rapport au poids de la résine thermoplastique transparente, et une séquence de composé de vinyle aromatique préparée en polymérisant entre 1 et 10 % en poids par rapport au poids de la résine thermoplastique transparente d'un composé de vinyle aromatique ; et
plus de 35 % en poids et moins de 95 % en poids par rapport au poids de la composition de résine thermoplastique transparente d'un copolymère séquencé de composé de vinyle aromatique-composé à base de diène conjugué, et
dans lequel le procédé de préparation de la composition de résine thermoplastique transparente comprend :
une première étape de polymérisation consistant à polymériser entre 50 et 80 % en poids d'un composé de vinyle aromatique, entre 10 et 30 % en poids d'un un composé de cyanure de vinyle, et plus de 0 et au moins 15 % en poids d'un ester d'alkyle d'acide (méth)acrylique ;
une deuxième étape de polymérisation consistant à polymériser en ajoutant en plus 1 et 10 % en poids du composé de vinyle aromatique ;
une étape d'obtention consistant à obtenir une résine thermoplastique transparente ; et
une étape de fusion et de malaxage consistant à fondre et malaxer plus de 5 % en poids et moins de 65 % en poids de la résine thermoplastique transparente obtenue avec plus de 35 % en poids et moins de 95 % en poids d'un copolymère séquencé de composé de vinyle aromatique-composé à base de diène conjugué, et
dans lequel la première étape de polymérisation est effectuée entre 105 et 115°C.

7. Composition de résine thermoplastique transparente selon la revendication 6, dans laquelle le copolymère séquencé de composé de vinyle aromatique-composé à base de diène conjugué comprend entre 10 et 90 % en poids d'un composé à base de diène conjugué.

8. Composition de résine thermoplastique transparente selon la revendication 6, dans laquelle le composé à base de diène conjugué est un ou plusieurs éléments sélectionnés dans le groupe constitué de 1,3-butadiène, 2-méthyl-1,3-butadiène, 2,3-diméthyl-1,3-butadiène, 2-éthyl-1,3-butadiène, 2,3-diméthyl-1,3-butadiène, 1,3-pentadiène et chloroprène.

9. Composition de résine thermoplastique transparente selon la revendication 6, dans laquelle la composition de résine thermoplastique transparente a une résistance aux chocs supérieure à 10,6 kgf•cm/cm.

10. Procédé de préparation d'une composition de résine thermoplastique transparente, le procédé comprenant :
une première étape de polymérisation consistant à polymériser entre 50 et 80 % en poids par rapport au poids de la résine thermoplastique transparente d'un composé de vinyle aromatique, entre 10 et 30 % en poids par rapport au poids de la résine thermoplastique transparente d'un composé de cyanure de vinyle et entre 0 et 15% en poids d'un ester d'alkyle d'acide (méth)acrylique ;
une deuxième étape de polymérisation consistant à polymériser en ajoutant en plus entre 1 et 10 % en poids par rapport au poids de la résine thermoplastique transparente du composé de vinyle aromatique ;
une étape d'obtention consistant à obtenir une résine thermoplastique transparente ; et
une étape de fusion et de malaxage consistant à fondre et malaxer plus de 5 % en poids et moins de 65 % en poids par rapport au poids de la composition de résine thermoplastique transparente de la résine thermoplastique transparente obtenue avec plus de 35 % en poids et moins de 95 % en poids par rapport au poids de la composition de résine thermoplastique transparente d'un copolymère séquencé de composé de vinyle aromatique-composé à base de diène conjugué, et
dans laquelle la première étape de polymérisation est effectuée entre 105 et 115°C.

11. Résine thermoplastique transparente fabriquée selon le procédé de préparation d'une résine thermoplastique transparente selon l'une quelconque des revendications 1 à 5.

12. Résine thermoplastique transparente selon la revendication 11, dans laquelle la résine thermoplastique transparente comprend :
une séquence de copolymérisation aléatoire préparée en polymérisant entre 50 et 80 % en poids d'un composé de vinyle aromatique, entre 10 et 30 % en poids d'un composé de cyanure de vinyle et entre 0 et 15 % en poids d'un ester d'alkyle d'acide (méth)acrylique ; et
une séquence de composé de vinyle aromatique préparée en polymérisant entre 1 et 10 % en poids d'un composé de vinyle aromatique.

13. Résine thermoplastique transparente selon la revendication 11, dans laquelle la séquence de composé de vinyle aromatique est liée à une extrémité ou aux deux extrémités de la séquence de copolymérisation aléatoire.

14. Résine thermoplastique transparente selon la revendication 11, dans laquelle la résine thermoplastique transparente a un indice de réfraction de 1,5675 ± 0,0040.

15. Résine thermoplastique transparente selon la revendication 11, dans laquelle la résine thermoplastique transparente a une masse moléculaire moyenne en poids comprise entre 185 000 et 300 000 g/mol.
